Europäisches Patentamt

European Patent Office

Office européen des brevets

(19)

(11) Numéro de publication : **0 511 039 A1**

(12) ## DEMANDE DE BREVET EUROPEEN

(21) Numéro de dépôt : 92400886.5

(22) Date de dépôt : 31.03.92

(51) Int. Cl.⁵ : **F16H 3/66**

(30) Priorité : **09.04.91 FR 9104281**

(43) Date de publication de la demande :
**28.10.92 Bulletin 92/44**

(84) Etats contractants désignés :
**DE ES FR GB IT**

(71) Demandeur : **REGIE NATIONALE DES USINES RENAULT S.A.**
**34, Quai du Point du Jour**
**F-92109 Boulogne Billancourt Cédex (FR)**

(72) Inventeur : **Buannec, Michel**
**65, rue du Tir**
**F-92000 Nanterre (FR)**

(54) **Dispositif de changement de vitesses comportant un train épicycloical, un convertisseur de couple et un étage supplémentaire d'inversion.**

(57)    Dispositif de changement de vitesse pour véhicule constitué d'une part d'un convertisseur hydraulique (1) entraîné par le moteur du véhicule, et d'autre part d'un train épicycloïdal (2) disposé en sortie de celui-ci et logé dans un carter (21), le train épicycloïdal (2) comportant des arbres menants (6,7) et mené (6') coaxiaux, des embrayages (8,10,16) des dispositifs d'immobilisation (17,18), un premier et un second planétaires centraux (9,11), un porte-satellite (12) portant un premier et un second jeu de satellites (14,15), chaque satellite du premier jeu (14) engrenant respectivement avec le premier planétaire (9) le porte-satellite (12) et un satellite correspondant du second jeu (15), chaque satellite du second jeu (15) engrènant respectivement avec le second planétaire (11), le porte-satellite (12) et un satellite correspondant du premier jeu (14), le train épicycloïdal (2) comportant également une couronne dentée (19) et un pignon de sortie (20), caractérisé en ce qu'il présente un étage supplémentaire d'inversion (3) disposé entre le convertisseur (1) et le train épicycloïdal (2).

FIG.1

EP 0 511 039 A1

La présente invention se rapporte au domaine technique des boîtes de vitesses automatiques comportant un convertisseur de couple, entraîné directement par le moteur du véhicule, et associé à un train épicycloïdal commandé par des freins et des embrayages.

Plus précisément, cette invention concerne un dispositif de changement de vitesses dans lequel le convertisseur et le train sont coaxiaux. Cette disposition est classique, et a déjà fait l'objet de nombreuses publications de brevet, telles que la publication FR 2.454.567 de la demanderesse. Le train épicycloïdal décrit dans cette publication permet d'obtenir quatre rapports de marche avant et un rapport de marche arrière, grâce à la combinaison de trois embrayages et de deux moyens d'immobilisation.

Par ailleurs, conformément au dispositif décrit dans cette publication, il est habituel que la sortie du train épicycloïdal soit coaxiale à son entrée. Dans ce cas, la sortie du train ne peut attaquer directement le pont car le sens de rotation de l'arbre de sortie du train doit préalablement être inversé. Le plus souvent l'inversion du couple est alors assurée par un engrenage à axes parallèles constituant "l'étage supplémentaire d'inversion" nécessaire pour retrouver une position et un sens de rotation de l'arbre de sortie de boîte vis-à-vis du pont, correspondants à celles d'un arbre de sortie de boîte de vitesses manuelle.

La présente invention propose un dispositif de changement de vitesses dont la structure permet simultanément de résoudre d'une façon appropriée le problème de l'inversion du sens de rotation de l'arbre de sortie et d'élargir les possibilités de fonctionnement d'un train épicycloïdal connu.

Elle concerne un dispositif de changement de vitesses pour véhicule, constitué d'une part d'un convertisseur hydraulique entraîné par le moteur du véhicule et d'autre part d'un train épicycloïdal disposé en sortie de celui-ci et logé dans un carter ; ce train comporte des arbres menants et mené coaxiaux, des embrayages, des dispositifs d'immobilisation, un premier et un second planétaires centraux, un porte-satellite portant un premier et un second jeu de satellites, chaque satellite du premier jeu engrenant respectivement avec le premier planétaire, le porte-satellite et un satellite correspondant du second jeu, chaque satellite du second jeu engrenant respectivement avec le second planétaire, le porte-satellite et un satellite correspondant du premier jeu, le train épicycloïdal comportant également une couronne dentée et un pignon de sortie. Ce dispositif est caractérisé en ce qu'il présente un étage supplémentaire d'inversion disposé entre le convertisseur et le train épicycloïdal.

Selon un mode de réalisation de l'invention, le train épicycloïdal attaque directement le pont du véhicule.

Selon un mode de réalisation de l'invention, la descente d'engrenages du convertisseur sur le train planétaire s'effectue au moyen d'un engrenage double.

Selon un mode de réalisation de l'invention, l'engrenage double entraîne un premier et un second arbres menants concentriques, liés respectivement à un ou plusieurs embrayages.

Selon un mode de réalisation de l'invention, le train épicycloïdal comporte trois embrayages, le premier embrayage, lié au premier arbre menant étant destiné à rendre celui-ci solidaire du premier planétaire, le second embrayage, lié au second arbre menant étant destiné à rendre celui-ci solidaire du second planétaire, le troisième embrayage lié au premier arbre menant étant destiné à rendre celui-ci solidaire du porte-satellite.

Selon un mode de réalisation de l'invention, le train épicycloïdal comporte trois embrayages, le premier embrayage, lié au premier arbre menant, étant destiné à rendre celui-ci solidaire du second planétaire, le second embrayage lié au premier arbre menant, étant destiné à rendre celui-ci solidaire du premier planétaire et le troisième embrayage lié au second arbre menant, étant destiné à rendre celui-ci solidaire de la couronne.

Selon un mode de réalisation de l'invention, le train épicycloïdal comporte deux moyens d'immobilisation destinés à immobiliser respectivement le second arbre menant et le satellite par rapport au carter.

Selon un mode de réalisation de l'invention, le premier rapport de marche avant est obtenu par serrage du premier embrayage et du premier moyen d'immobilisation.

Selon un mode de réalisation de l'invention, le premier rapport de marche avant est obtenu par serrage du premier embrayage et immobilisation du porte-satellite, vis-à-vis du carter, par la roue libre.

Selon un mode de réalisation de l'invention, le second rapport de marche avant est obtenu par serrage du premier embrayage et actionnement du second moyen d'immobilisation, de façon à immobiliser le second planétaire et à entraîner en rotation le porte-satellite dans le sens autorisé par la roue libre, inverse de celui de l'arbre d'entrée.

Selon un mode de réalisation de l'invention, le troisième rapport de marche avant est obtenu en serrant le premier et le second embrayage.

Selon un mode de réalisation de l'invention, le quatrième rapport de marche avant est obtenu en serrant le premier et le troisième embrayage.

Selon un mode de réalisation de l'invention, le cinquième rapport de marche avant est obtenu en serrant le second et le troisième embrayage.

Selon un mode de réalisation de l'invention, le sixième rapport de marche avant est obtenu en serrant le troisième embrayage et en actionnant le second moyen d'immobilisation.

L'invention sera mieux comprise à la lecture de la description suivante d'un mode de réalisation particulier de celle-ci, en liaison avec les dessins annexés sur lesquels :

- la figure 1 représente de façon schématique l'architecture du dispositif de changement de vitesses faisant l'objet de l'invention,
- la figure 2 est une variante de la figure 1,
- la figure 3 met en évidence les combinaisons fonctionnelles d'un dispositif de changement de vitesse classique à quatre rapports de marche avant (3 A) et celles du dispositif de changement de vitesses de l'invention (3 B).

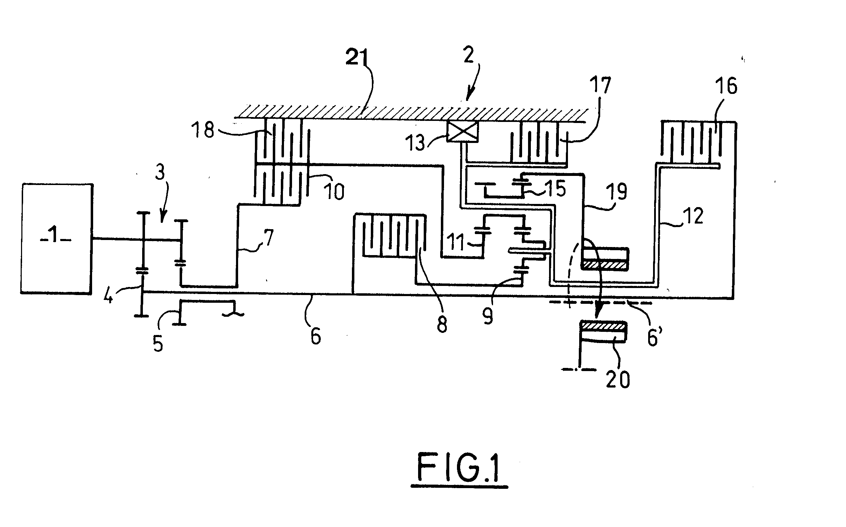

Le dispositif de changement de vitesses représenté schématiquement sur la figure 1 comporte un convertisseur de couple 1, un train épicycloïdal 2 et un engrenage double à axes parallèles 3, disposé entre ceux-ci. L'engrenage double 3 présente une première et une seconde sortie 4, 4', et 5 et 5' entraînant respectivement les premier et second arbre menant 6, 7 du train, à deux vitesses différentes, la première sortie 4, 4' multipliant la vitesse de l'arbre du moteur 1, tandis que la seconde 5, 5' réduit celle-ci. Le premier et le second arbre menant 6, 7 sont coaxiaux. Sur le premier arbre menant 6 est prévu un premier embrayage 8 (E1), destiné à rendre solidaire ce premier arbre menant 6 d'un premier planétaire central 9 (P1) du train 2. Le second arbre menant 7 porte un second embrayage 10 (E2) destiné à rendre solidaire ce second arbre menant 7, du second planétaire central 11 (P2) du train épicycloïdal 2.

Le train épicycloïdal 2 comporte un porte-satellite 12 (PS) monté sur une roue libre 13 portée par le carter 21, qui autorise sa rotation en sens inverse de l'arbre d'entrée 6. Le premier planétaire 9 (P1) porte un premier jeu de satellites 14 et le second planétaire 11 (P2) porte un second jeu de satellites 15. Le premier et le second jeu de satellites 14, 15 sont également en prise avec le porte-satellite 12 (PS). Chaque satellite du premier jeu 14 engrène respectivement avec le premier planétaire 9 (P1), le porte-satellite 12 (PS) et un satellite du second jeu 15, tandis que chaque satellite du second jeu 15 engrène respectivement avec le second planétaire 11 (P2), le porte-satellite 12 (PS), et un satellite du premier jeu 14.

Un troisième embrayage 16 (E3) est destiné à rendre le premier arbre menant 6 solidaire du porte-satellite 12 (PS). Par ailleurs le dispositif est muni d'un premier et d'un second moyen d'immobilisation 17, 18 (F1, F2) permettant d'immobiliser respectivement le porte-satellite 12 (PS) et le second arbre 7 menant par rapport au carter 21. Enfin la sortie du train épicycloïdal 2 s'effectue par l'intermédiaire d'une couronne dentée 19 en prise sur le second jeu de satellites 15, et entraînant un pignon de sortie 20. Conformément à l'invention, le pignon de sortie 20 attaque directement le pont du véhicule (non représenté), puisque l'étage supplémentaire d'inversion 3 est disposé à l'entrée du train 2, entre celui-ci et le convertisseur 1.

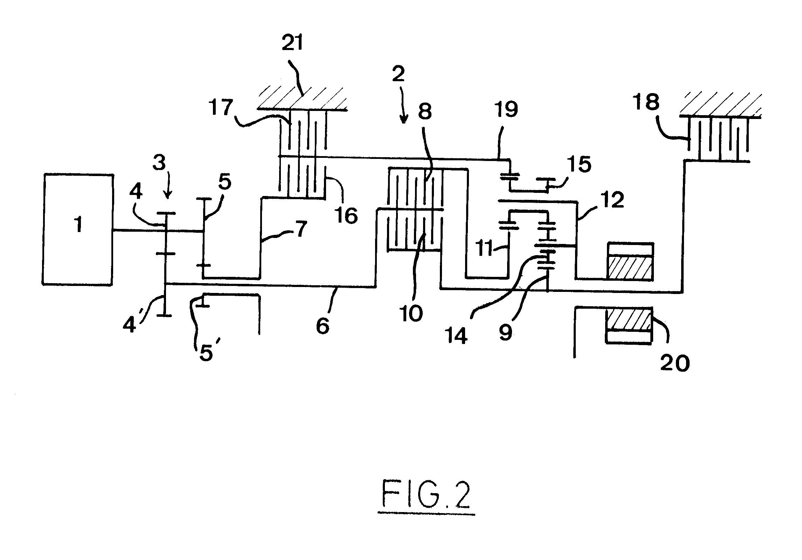

Selon la variante de ce dispositif de changement de vitesses illustrée par la figure 2, les deux sorties 4, 4' et 5, 5' sont inversées, la réduction étant cette fois obtenue sur la seconde sortie 5, 5' et le second arbre menant 7. Le premier arbre menant 6 est lié au premier et au second embrayage 8, 10 (E1, E2), tandis que le second arbre menant 7 et relié au troisième embrayage 16 (E3) et au premier moyen d'immobilisation 17. La roue libre (RL) est supprimée, et le premier arbre est également relié au second moyen d'immobilisation 18.

La disposition des premier et second planétaires 9, 11 (P1 et P2), des premier et second jeu de satellites 14, 15 ainsi que du porte-satellite 12 et de la couronne, correspond à celle de la figure 1. Toutefois, la sortie du mouvement s'effectue non plus par la couronne 19, mais par le porte-satellite 12, sur lequel est monté le pignon de sortie 20.

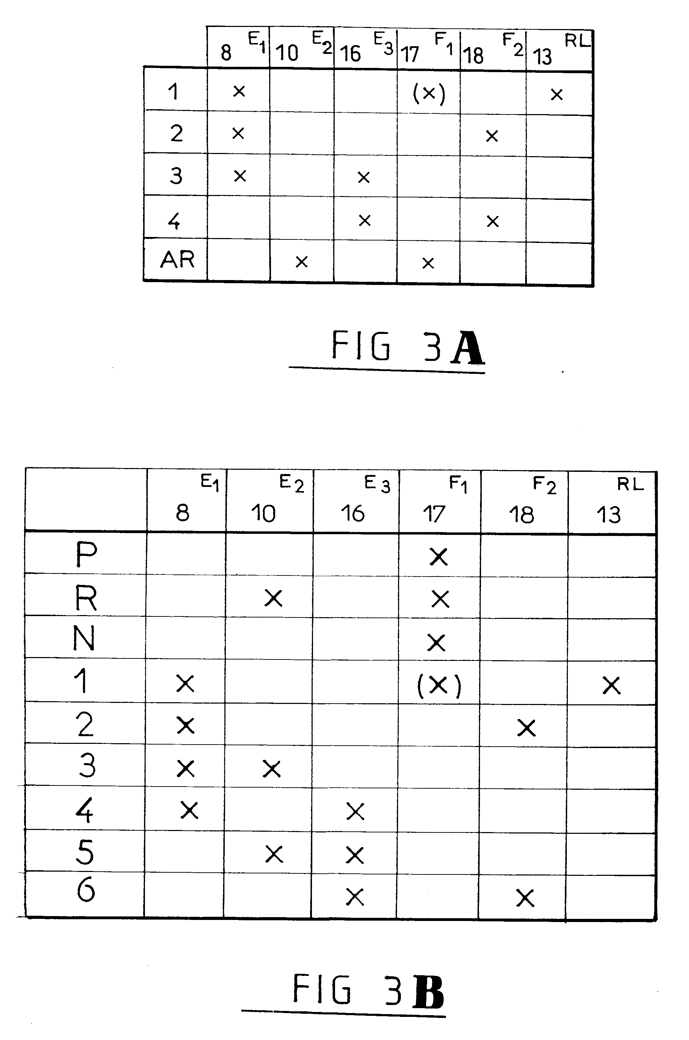

La figure 3 A illustre les combinaisons fonctionnelles d'un dispositif de changement de vitesse à arbre d'entrée non dédoublé, dont le train présente une structure analogue à celle de l'invention, et comporte notamment trois embrayages E1, E2, E3, une roue libre (RL) et deux moyens d'immobilisation F1, F2 correspondant à ceux de l'invention. Ce tableau met notamment en évidence que le premier rapport de marche avant est le résultat du serrage du premier embrayage 8 et du blocage de la roue libre 13, que le second rapport de marche avant est le résultat du serrage du premier embrayage 8 et de l'actionnement du second moyen d'immobilisation 18, que le troisième rapport de marche avant est le résultat du serrage du premier et du troisième embrayage 8, 16, que le quatrième rapport de marche avant est le résultat du serrage du second embrayage 10 et de l'actionnement du second moyen d'immobilisation 18, tandis que la marche arrière est le résultat du serrage du second embrayage 10 et de l'actionnement du premier moyen d'immobilisation 17.

La figure 3 B se rapporte aux combinaisons fonctionnelles du dispositif de changement de vitesses de l'invention. On comprend aisément que le dédoublement de l'arbre d'entrée 6, 7 ouvre de nouvelles combinaisons fonctionnelles qui sont mises à profit pour obtenir des rapports supplémentaires. En effet, conformément à l'invention, le premier et le troisième embrayage 8, 16, (E1, E2) sont liés à un arbre menant (l'arbre 6 dans le cas de la figure 1 et l'arbre 7 dans celui de la figure 2), tandis que le second embrayage 10 (E2) est lié à l'autre arbre menant.

Conformément à l'invention, les positions "parking" (P) et "neutral" (N) correspondent à l'actionnement du premier moyen d'immobilisation 17, tandis que la marche arrière (R) s'obtient en serrant le second embrayage 10 simultanément à l'actionnement du premier moyen d'immobilisation 17.

Le premier rapport de marche avant est obtenu en actionnant le premier embrayage 8 (E1), la transmission du couple moteur à partir du convertisseur 1 s'effectuant par le premier embrayage 8 (E1) vers le premier planétaire 9 (P1) puis par les satellites 14, 15, ces derniers engrènant avec la couronne 19 solidaire du pignon de sortie 20 selon la figure 1. Les axes des satellites 14, 15 prennent appui sur le porte-satellite 12 (PS), qui est immobilisé par rapport au carter 21 par la roue libre 13. (RL). Selon la figure 2, en l'absence de roue libre, le second arbre menant est immobilisé en serrant le premier moyen d'immobilisation 17 (F1).

Le second rapport de marche avant est obtenu en maintenant actionné le premier embrayage 8 (E1) et en actionnant le second moyen d'immobilisation (F2) 18. Selon la figure 1 le second planétaire 11 est immobilisé et le porte-satellite 12 est entraîné en rotation dans le sens inverse de l'arbre d'entrée 6, 7, autorisé par la roue libre 13. En revanche, selon la figure 2 le second moyen d'immobilisation 18 (F2) immobilise le premier planétaire tandis que le premier embrayage 8 (E1) rend solidaire le second planétaire 11 (P2) du premier arbre mené 6.

Pour engager le troisième rapport de marche avant, on prévoit que le premier et le second embrayage 8, 10, soient serrés simultanément.

Le quatrième rapport de marche avant s'obtient en serrant simultanément le premier et le troisième embrayage 8, 16.

Le cinquième rapport de marche avant s'obtient en serrant simultanément le second et le troisième embrayage (10, 16).

Le sixième rapport de marche, avant obtenu uniquement dans le cas de la figure 1, requiert le serrage du troisième embrayage 16 simultanément à l'actionnement du second moyen d'immobilisation 18.

Comme il ressort de la description précédente l'adaptation judicieuse de l'étage supplémentaire à l'entrée du train épicycloïdal, sous la forme d'une double descente d'engrenages, associée au dédoublement de l'arbre d'entrée permet d'élargir les possibilités d'utilisation d'un dispositif de changement de vitesses classique à quatre rapports de marche avant sans modifier la structure interne du train ni augmenter le nombre d'embrayages et/ou de moyens d'immobilisation.

## Revendications

[1] Dispositif de changement de vitesse pour véhicule constitué d'une part d'un convertisseur hydraulique (1) entraîné par le moteur du véhicule, et d'autre part d'un train épicycloïdal (2) disposé en sortie de celui-ci et logé dans un carter (21), le train épicycloïdal (2) comportant des arbres menants (6, 7) et mené (6') coaxiaux, des embrayages (8, 10, 16) des dispositifs d'immobilisation (17, 18), un premier et un second planétaires centraux (9, 11), un porte-satellite (12) portant un premier et un second jeu de satellites (14, 15), chaque satellite du premier jeu (14) engrenant respectivement avec le premier planétaire (9) le porte-satellite (12) et un satellite correspondant du second jeu (15), chaque satellite du second jeu (15) engrènant respectivement avec le second planétaire (11), le porte-satellite (12) et un satellite correspondant du premier jeu (14), le train épicycloïdal (2) comportant également une couronne dentée (19) et un pignon de sortie (20), caractérisé en ce qu'il présente un étage supplémentaire d'inversion (3) disposé entre le convertisseur (1) et le train épicycloïdal (2).

[2] Dispositif de changement de vitesses selon la revendication 1 caractérisé en ce que le train épicycloïdal (2) attaque directement le pont du véhicule.

[3] Dispositif de changement de vitesses selon les revendications 1 ou 2 caracérisé en ce que la descente d'engrenages (3) du convertisseur (1) sur le train planétaire (2) s'effectue au moyen d'un engrenage double (4, 5).

[4] Dispositif de changement de vitesses selon la revendication 3 caractérisé en ce que l'engrenage double (4, 5) entraîne un premier et un second arbre menants (6, 7) concentriques, liés respectivement à un ou plusieurs embrayages (8, 10, 16).

[5] Dispositif de changement de vitesses selon l'une quelconque des revendications précédentes, caractérisé en ce que le train épicycloïdal (2) comporte trois embrayages (8, 10, 16), le premier embrayage (8) lié au premier arbre menant (6), étant destiné à rendre celui-ci solidaire du premier planétaire (9), le second embrayage (10), lié au second arbre menant (7) étant destiné à rendre celui-ci (7) solidaire du second planétaire (11), et le troisième embrayage (16), lié au premier arbre (6), étant destiné à rendre celui-ci (6) solidaire du porte-satellite (12).

[6] Dispositif de changement de vitesses selon l'une quelconque des revendications 1 à 4, caractérisé en ce que le train épicycloïdal comporte trois embrayages (8, 10, 16), le premier embrayage (8) lié au premier arbre menant étant destiné à rendre celui-ci solidaire du second planétaire (11), le second embrayage, lié au premier arbre menant (6) étant destiné à rendre celui-ci solidaire du premier planétaire (11), et le troisième embrayage (16) lié au second arbre menant (7), étant destiné à rendre celui-ci (7) solidaire de la couronne (19).

[7] Dispositif de changement de vitesses selon l'une quelconque des revendications 1 à 5, caractérisé en ce que le premier rapport de marche avant est obtenu par serrage du premier embrayage (8) et immobilisation du porte-satellite (12) vis-à-vis du carter (21) par la roue libre (13).

[8] Dispositif de changement de vitesses selon l'une quelconque des revendications 1 à 4 et 6, caractérisé en ce que le premier rapport de marche avant est obtenu par serrage du premier embrayage (8) et du premier moyen d'immobilisation (17).

[9] Dispositif de changement de vitesses selon l'une quelconque des revendications précédentes caractérisé en ce que le second rapport de marche avant est obtenu par serrage du premier embrayage (8) et actionnement du second moyen d'immobilisation (18)

[10] Dispositif de changement de vitesses selon l'une quelconque des revendications précédentes, caractérisé en ce que le troisième rapport de marche avant est obtenu en serrant le premier et le second embrayage (8, 16).

[11] Dispositif de changement de vitesses selon l'une quelconque des revendications présentes, caractérisé en ce que le quatrième rapport de marche avant est obtenu en serrant le premier et le troisième embrayage (8, 16).

[12] Dispositif de changement de vitesses selon l'une quelconque des revendications précédentes, caractérisé en ce que le cinquième rapport de marche avant est obtenu en serrant le second et le troisième embrayage (10, 16).

[13] Dispositif de changement de vitesses selon l'une quelconque des revendications 1 à 5, 7 et 9 à 12, caractérisé en ce que le sixième rapport de marche avant est obtenu en serrant le troisième embrayage (16) et en actionnant le second moyen d'immobilisation (18).

FIG.1

FIG.2

|  | 8 $E_1$ | 10 $E_2$ | 16 $E_3$ | 17 $F_1$ | 18 $F_2$ | 13 RL |
|---|---|---|---|---|---|---|
| 1 | × |  |  | (×) |  | × |
| 2 | × |  |  |  | × |  |
| 3 | × |  | × |  |  |  |
| 4 |  |  | × |  | × |  |
| AR |  | × |  | × |  |  |

## FIG 3**A**

|  | $E_1$ 8 | $E_2$ 10 | $E_3$ 16 | $F_1$ 17 | $F_2$ 18 | RL 13 |
|---|---|---|---|---|---|---|
| P |  |  |  | × |  |  |
| R |  | × |  | × |  |  |
| N |  |  |  | × |  |  |
| 1 | × |  |  | (×) |  | × |
| 2 | × |  |  |  | × |  |
| 3 | × | × |  |  |  |  |
| 4 | × |  | × |  |  |  |
| 5 |  | × | × |  |  |  |
| 6 |  |  | × |  | × |  |

## FIG 3**B**

Office européen
des brevets

**RAPPORT DE RECHERCHE EUROPEENNE**

Numero de la demande

EP    92 40 0886

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| X | GB-A-1 190 088 (FERODO S.A.F) | 1-4 | F16H3/66 |
| Y | * le document en entier * | 5-10,13 | |
| | --- | | |
| Y | US-A-4 561 328 (HIRAMATSU) | 5,7,9, 10,13 | |
| | * le document en entier * | | |
| | --- | | |
| Y | EP-A-0 385 345 (NISSAN MOTOR CO LTD) | 6,8 | |
| | * le document en entier * | | |
| | --- | | |
| X | US-A-3 077 795 (R.O.CHAMBERS) | 1-2 | |
| Y | * page 1, colonne 1, ligne 44 - colonne 2, ligne 3 * | 5,7,10 | |
| | --- | | |
| Y | US-A-4 934 216 (SANDEL ET AL.) | 5,7,10 | |
| A | * le document en entier * | 9,11-13 | |
| | --- | | |
| A | US-A-3 915 033 (POLAK) | 1-4 | |
| | * abrégé; figure 1 * | | |
| | --- | | |
| A | DE-A-1 630 849 (NISSAN K.K.) | 1-4 | DOMAINES TECHNIQUES RECHERCHES (Int. Cl.5 ) |
| | * figure 3 * | | |
| | ----- | | F16H |

Le présent rapport a été établi pour toutes les revendications

| Lieu de la recherche | Date d'achèvement de la recherche | Examinateur |
|---|---|---|
| LA HAYE | 11 AOUT 1992 | VINGERHOETS A. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
........................................................................
& : membre de la même famille, document correspondant

EPO FORM 1503 03.82 (P0402)